Europäisches Patentamt

European Patent Office

Office européen des brevets

(11) Numéro de publication : **0 446 091 A1**

(12)

# DEMANDE DE BREVET EUROPEEN

(21) Numéro de dépôt : 91400463.5

(51) Int. Cl.⁵ : **F16F 9/12, F16F 9/44**

(22) Date de dépôt : 20.02.91

(30) Priorité : 09.03.90 FR 9003052
25.06.90 FR 9007943

(43) Date de publication de la demande :
11.09.91 Bulletin 91/37

(84) Etats contractants désignés :
DE ES GB IT

(71) Demandeur : GLAENZER SPICER
10 Rue J.P. Timbaud
F-78301 Poissy (FR)

(72) Inventeur : Guimbretiere, Pierre
103, route de Saint Germain
F-78640 Neauphle le Chateau (FR)

(74) Mandataire : Kohn, Philippe et al
c/o CABINET LAVOIX 2, place d'Estienne
d'Orves
F-75441 Paris Cédex 09 (FR)

(54) Amortisseur rotatif à fluide visqueux.

(57)    L'invention propose un amortisseur rotatif (10) du type comportant un carter cylindrique creux étanche (12) dans lequel sont agencés des disques (50A, 50B) qui sont alternativement solidaires en rotation du carter (12) ou d'un arbre central coaxial (22) monté à rotation dans le carter (12), la chambre interne (20) délimitée par le carter (12) étant remplie au moins partiellement d'un fluide visqueux reçu entre les faces en vis-à-vis des disques, caractérisé en ce qu'il comporte des moyens (58) pour faire varier la loi d'amortissement de l'amortisseur en fonction du déplacement angulaire relatif de l'arbre central (22) par rapport au carter (12).

FIG.1

EP 0 446 091 A1

## AMORTISSEUR ROTATIF A FLUIDE VISQUEUX

La présente invention concerne un amortisseur rotatif. Elle concerne plus particulièrement un amortisseur de ce type utilisé dans la conception des véhicules automobiles.

Des amortisseurs rotatifs à friction sèche ou à palettes pour amortir les débattements des suspensions des véhicules ont été utilisés dès l'origine, en particulier lorsque ces suspensions étaient du type à ressorts à lames. Dans ce but on transformait, à l'aide d'un système à levier, le débattement vertical de la roue par rapport à la caisse du véhicule en une rotation oscillatoire qui était appliquée à l'amortisseur.

Ces amortisseurs ont depuis été généralement remplacés par des amortisseurs téléscopiques hydrauliques et/ou à gaz qui travaillent soit verticalement comme dans le cas des suspensions Mac Pherson, soit horizontalement ou selon une direction inclinée, en particulier pour des suspensions arrières dites à renvoi "à sonnettes" et qui permettent d'assurer les meilleures qualités possibles de tenue de route des véhicules.

En effet, en ce qui concerne la tenue de route d'un véhicule prise au sens le plus général du terme, il est nécessaire que les taux d'amortissements soient très différents selon que l'amortisseur travaille en compression ou en extension (détente).

A titre indicatif on peut donner les valeurs suivantes :

A. Dans une course de compression :

a. Voitures très sportives
On relève des taux d'amortissements de l'ordre de 5000 N/m/sec pour des vitesses comprises entre 0 et 0,10 mètres/seconde ; quand la vitesse atteint la valeur de 0,5 mètre/seconde, le taux d'amortissement est de l'ordre du tiers de la valeur précédente.
b. Voitures "normales" :
On relève des taux de l'ordre de 2500 N/m/sec pour 0,10 mètre/seconde et à nouveau environ un tiers de ces taux pour une vitesse de 0,5 mètre/seconde.
c. Voitures très confortables :
Les taux sont de l'ordre de 1250 N/m/sec pour 0,10 mètre/seconde et à nouveau environ un tiers pour une vitesse de 0,5 mètre/seconde.

B. Dans une course d'extension :

D'une façon générale, les taux d'amortissement sont le double de ceux rencontrés en compression tout du moins pour des vitesses comprises entre 0 et 0,10 mètre/seconde ; quant aux taux pour des vitesses de l'ordre de 0,50 mètre/seconde, ceux-ci sont de l'ordre de la moitié des taux précédents.

Avec les amortisseurs téléscopiques classiques qui équipent les véhicules automobiles de nos jours, ces différents taux d'amortissement sont obtenus en agissant sur les différentes valves qui travaillent dans l'un ou l'autre sens.

Les amortisseurs rotatifs peuvent être envisagés avantageusement dans la conception de certaines suspensions, autres que celles à ressorts à lames, et par exemple dans le cas des suspensions à bras tirés dans lesquelles il est possible de disposer un amortisseur rotatif entre le châssis et l'extrémité du bras qui se débat, ou de le monter simplement coaxialement avec l'axe d'articulation des bras tirés par rapport au châssis.

Mais de tels amortisseurs rotatifs doivent permettre d'obtenir les performances d'amortissement telles que celles mentionnées plus haut.

Il a déjà été proposé dans le document FR-A-2.173.441 un amortisseur rotatif constitué d'un corps cylindrique creux étanche à l'intérieur duquel est calé, sur un arbre coaxial à l'axe longitudinal du corps, un rotor cylindrique constitué de plusieurs disques ou de cylindres tandis que le corps cylindrique est partagé en autant de chambres qu'il y a de disques ou de cylindres, chacune des chambres recevant un disque et étant totalement remplie d'un matériau semi-liquide, pâteux, visqueux, élastomère dont la déformation rhéologique provoque un effet retardateur à volume constant et sans pression interne du matériau en exerçant un mouvement relatif entre le rotor et le corps cylindrique. Ce même document propose également, dans le cas où l'on veut obtenir pour une raison quelconque un fonctionnement dissymétrique de l'amortisseur comme cela est par exemple le cas d'un amortisseur de véhicule automobile, de munir la paroi périphérique d'au moins un des éléments, par exemple du rotor, d'une série de dents dissymétriques. Il découle de cet agencement que la déformation rhéologique du matériau remplissant le volume de chaque chambre est supérieure lorsque le rotor tourne dans l'un ou dans l'autre sens.

Le dispositif décrit et représenté dans le document qui vient d'être mentionné ne permet toutefois pas d'obtenir des lois de variation du type mentionné plus haut.

Afin de résoudre ce problème, l'invention propose un amortisseur rotatif du type comportant un carter cylindrique creux étanche dans lequel sont agencés des disques qui sont alternativement solidaires en rotation du carter ou d'un arbre central coaxial montés à rotation dans le carter, la chambre interne délimitée par le carter étant remplie au moins partiellement d'un fluide visqueux reçu entre les faces en vis-à-vis des disques, caractérisé en ce qu'il comporte des moyens pour faire varier la loi d'amortissement de l'amortisseur en fonction du déplacement angulaire relatif de l'arbre central par rapport au carter.

Selon d'autres caractéristiques de l'invention :
- les moyens pour faire varier la loi d'amortisse
- les moyens pour faire varier la loi d'amortissement agissent pour faire varier l'écartement entre les faces en vis-à-vis des disques ;
- les moyens pour faire varier l'écartement entre les faces en vis-à-vis des disques comportent un organe de déplacement axial des disques agencé à l'intérieur du carter et des moyens de conversion dudit déplacement angulaire relatif en un déplacement axial de l'organe de déplacement des disques ;
- l'organe de déplacement est solidaire en rotation et susceptible de se déplacer axialement par rapport à l'un des deux éléments constitué par le carter et l'arbre central, et il est relié à l'autre desdits deux éléments par coopération de formes prévues respectivement sur l'organe de déplacement et sur l'autre des deux éléments qui convertissent ledit déplacement angulaire relatif en un déplacement axial de l'organe à l'intérieur de ladite chambre ;
- les formes comportent un filetage mâle et un taraudage complémentaire formés respectivement sur l'organe de déplacement ou l'autre desdits deux éléments ;
- lesdites formes comportent un chemin de came circulaire lié en rotation à l'organe de déplacement ou audit autre élément et un élément suiveur de came lié en rotation audit autre élément ou audit organe ;
- les moyens pour faire varier la loi d'amortissement agissent pour faire varier la pression de fluide dans la chambre ;
- l'organe de déplacement comporte une portion qui s'étend axialement à l'extérieur du carter de manière à faire varier le volume de la partie de l'organe de déplacement reçue dans la chambre en fonction de la position axiale de l'organe de déplacement par rapport au carter pour faire varier ainsi la pression interne du fluide dans la chambre ;
- la variation de volume est une augmentation de volume lorsque l'organe de déplacement se déplace axialement par rapport au carter dans le sens correspondant à la réduction de l'écartement entre les faces en vis-à-vis des disques ;
- la variation de volume est une réduction de volume lorsque l'organe de déplacement se déplace axialement par rapport au carter dans le sens correspondant à la réduction de l'écartement entre les faces en vis-à-vis des disques ;
- les disques sont montés coulissants axialement par rapport au carter et à l'arbre central ;

- l'amortisseur comporte un organe actif agencé à l'extérieur du carter dont une partie s'étend axialement à l'intérieur du carter au travers d'un orifice ménagé dans un flasque latéral du carter dans lequel il est reçu coulissant axialement et un organe de déplacement axial de l'organe actif par rapport au carter dont les déplacements sont commandés par des moyens de conversion du déplacement angulaire relatif de l'arbre central par rapport au carter en un déplacement axial de l'organe de déplacement;
- l'organe de déplacement est solidaire en rotation de l'un des deux éléments constitués par le carter et l'arbre central et susceptible de se déplacer axialement par rapport à l'un de ces deux éléments, et il est relié à l'autre des deux éléments par coopération de formes prévues respectivement sur l'organe de déplacement et sur l'autre des deux éléments et qui convertissent le déplacement angulaire relatif en un déplacement axial de l'organe de déplacement ;
- les formes coopérantes comportent un filetage mâle et un taraudage complémentaire formés sur l'organe de déplacement ou sur l'autre des deux éléments ;
- l'organe actif est un piston dont la tige cylindrique est reçue dans l'orifice du flasque et dont la tête agencée à l'extérieur du carter coopère avec l'organe de déplacement axial ;
- l'organe de déplacement axial est un disque dont la face tournée vers le carter coopère avec la face en vis-à-vis de la tête du piston ;
- des moyens de rappel élastique du piston dans la direction correspondant à la sortie de la tige hors du carter sont agencés entre la tête du piston et la face en vis-à-vis du flasque latéral du carter ;
- l'organe actif est une tige reçue dans l'orifice du flasque et dont l'extrémité libre agencée à l'extérieur du carter est fixée à l'organe de déplacement axial ;
- le filetage mâle est formé sur l'organe de déplacement et le taraudage complémentaire est formé dans le carter ;
- le filetage mâle est formé sur l'arbre central et le taraudage complémentaire est formé sur l'organe de déplacement axial ; et
- des moyens d'étanchéité sont agencés dans la paroi de l'orifice pour coopérer avec la surface en vis-à-vis de l'organe actif.

D'autres caractéristiques et avantages de l'invention apparaîtront à la lecture de la description détaillée qui va suivre pour la compréhension de laquelle on se reportera aux dessins annexés dans lesquels :
- La figure 1 est une demi-vue schématique en coupe axiale d'un premier mode de réalisation d'un amortisseur conforme aux enseignements de l'invention ;
- la figure 2 est une vue partielle similaire à celle de la figure 1 d'une première variante de réalisation ;

– la figure 3 est une vue similaire à celle de la figure 1 d'une deuxième variante de réalisation ;

– la figure 4 est une vue partielle similaire à celle de la figure 1 d'une troisième variante de réalisation ;

– la figure 5 est une vue similaire à celle de la figure 1 d'une quatrième variante de réalisation de l'invention ;

– la figure 6 est une demi-vue schématique en coupe axiale d'une cinquième variante de réalisation d'un amortisseur conforme aux enseignements de la présente invention ; et

– la figure 7 est une vue similaire à celle de la figure 6 d'une septième variante de réalisation de l'amortisseur rotatif.

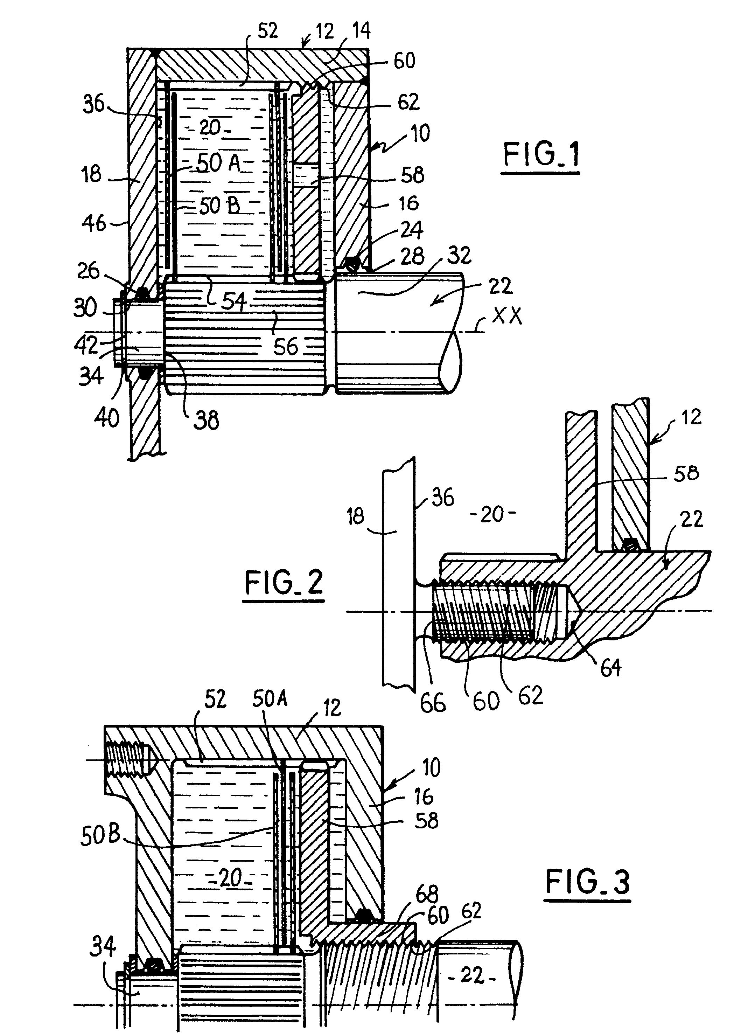

L'amortisseur rotatif 10 représenté à la figure 1 comprend un carter cylindrique creux 12 d'axe X-X constitué par une virole cylindrique extérieure 14 et deux flasques latéraux 16 et 18 qui délimitent une chambre interne cylindrique 20.

Les deux flasques latéraux 16 et 18 en forme de disque sont percés dans leur centre pour permettre le passage d'un arbre central 22 coaxial au carter 12.

L'arbre central 22 est monté libre en rotation dans le carter 12 et l'étanchéité de la chambre 20 est assurée par deux joints toriques 24 et 26 montés dans des gorges formées dans les faces cylindriques 28 et 30 qui délimitent les alésages centraux des flasques 16 et 18, les joints 24 et 26 coopérant avec des portées cylindriques correspondantes 32 et 34 de l'arbre 22.

Le carter 12 est immobilisé axialement par rapport à l'arbre 22 selon la direction X-X du fait de la coopération de la face interne 36 du flasque 18 avec l'épaulement 38 de l'arbre 22 qui délimite la portée cylindrique 34, épaulement contre lequel il est maintenu en appui grâce à un anneau élastique 40 monté dans une gorge 42 de la portée cylindrique 34 contre la face extérieure 46 du flasque 18.

La chambre interne 20 reçoit une pluralité de disques 50A et 50B qui sont percés dans leur centre et sensiblement coaxiaux à l'axe X-X.

Les disques 50A et 50B sont alternés et sont alternativement solidaires en rotation du carter 12 et de l'arbre 22 respectivement.

Ainsi les disques 50A sont montés coulissants axialement sur des clavettes axiales 52 formées dans la paroi cylindrique interne de la virole 14, tandis que les disques 50B sont montés coulissants axialement sur des clavettes axiales 54 formées sur la portion 56 de l'arbre 22 qui s'étend entre les portées cylindriques 32 et 34.

L'amortisseur 10 comporte également un organe 58 de déplacement axial des disques.

L'organe de déplacement 58 est réalisé sous la forme d'un disque plus épais qui est monté coulissant en son centre sur les cannelures axiales 54 de l'arbre 22. Le bord cylindrique annulaire extérieur du disque de déplacement 58 comporte un filetage mâle 60 qui est reçu dans un taraudage complémentaire 62 formé dans la paroi cylindrique intérieure de la virole 14 du côté du flasque 16 entre celui-ci et les cannelures axiales 52.

La chambre étanche 20 est remplie au moins partiellement d'un fluide visqueux de manière que l'amortisseur rotatif 10 constitue un ensemble analogue au dispositif connu sous le nom de visco-coupleur.

Pour réaliser une fonction d'amortissement, les deux éléments principaux 12 et 22 doivent bien entendu être reliés séparément à deux éléments de structure mobiles en rotation l'un par rapport à l'autre entre lesquels on désire assurer une fonction d'amortissement.

L'amortisseur rotatif qui vient d'être décrit fonctionne de la manière suivante.

Si l'arbre central 22 est entraîné en rotation par rapport au carter 12, dans un premier sens de rotation, il entraîne en rotation les disques 50B entre les disques 50A et produit un effet classique de laminage du fluide visqueux qui procure un effet de freinage de la rotation. Cette même rotation de l'arbre 22 entraîne en rotation le disque de déplacement 58 par les cannelures 54 et provoque donc son déplacement axial par rapport à l'arbre 22 et au carter 12 du fait de la coopération entre le filet 60 et le taraudage 62. En fonction du sens du filetage, la rotation dans le premier sens, par exemple horaire, de l'arbre 22 provoque le déplacement axial du disque de déplacement 58 dans la direction correspondant au rapprochement des disques 50A et 50B, c'est-à-dire vers la gauche en considérant la figure 1.

Ce premier déplacement axial a donc pour effet de réduire l'écartement entre les disques 50A et 50B et donc de faire varier la loi d'amortissement résultant du laminage du fluide visqueux en fonction du déplacement angulaire en rotation de l'arbre 22 par rapport au carter 12.

On comprend aisément que la rotation de l'arbre 22 par rapport au carter 12 dans le sens opposé, par exemple le sens anti-horaire, provoque le déplacement du disque 58 selon la direction axiale opposée qui correspond à un éloignement mutuel des disques 50A et 50B et qui procure donc une loi d'amortissement différente.

Un résultat identique aurait bien entendu été obtenu dans le cas où le filetage 60 et le taraudage 62 auraient été prévus sur l'arbre 22 et le disque de déplacement 58 aurait été guidé axialement sur les cannelures 52. Dans le cas d'une application à l'amortissement des mouvements de suspension de véhicule automobile, on notera que l'oscillation de rotation est accompagnée par un ressort agissant en parallèle avec l'amortisseur.

Par exemple, si le filetage a un pas de 3 mm on obtient un déplacement axial du disque 58 de plus ou moins 0,3 mm pour une oscillation en rotation de plus ou moins 36° et donc par exemple un rapprochement de l'ordre de 0,03 mm entre les disques de l'amortisseur dans le cas où il y a cinq paires de disques alternés.

On décrira maintenant les autres variantes de réalisation de l'invention pour lesquelles on utilisera les mêmes chiffres de référence que ceux de la figure 1 pour désigner des éléments identiques ou équivalents.

Dans la variante de réalisation représentée à la figure 2, le disque de déplacement 58 forme un tout avec l'arbre 22 et son déplacement axial à l'intérieur de la chambre 20 est obtenu au moyen d'une liaison filetée qui comporte un taraudage interne 62 formé dans un alésage borgne coaxial 64 de l'arbre 22 et un filetage mâle 60 formé sur la paroi cylindrique externe d'un doigt central coaxial 66 fixé sur la face interne 36 du flasque latéral 18.

Des disques 50A et 50B (non représentés) sont bien entendu agencés dans la chambre 20 de la même manière qu'à la figure 1.

L'amortisseur représenté à la figure 2 permet d'une part de faire varier la loi d'amortissement en fonction de l'angle de rotation selon le même principe que dans le cas de la figure 1, c'est-à-dire en faisant varier l'écartement entre les disques mais il permet également de faire varier la pression interne à l'intérieur de la chambre 20.

En effet, tout déplacement en rotation de l'arbre 22 par rapport au carter 12 entraîne un déplacement axial relatif de l'arbre 22 à l'intérieur de la chambre 20 et, selon que ce déplacement axial a lieu dans un sens ou dans l'autre (vers la gauche ou vers la droite en considérant la figure 2), il se produit un accroissement ou une réduction du volume de la portion de l'arbre 22 située à l'intérieur de la chambre 20 et donc une variation du volume disponible pour le liquide visqueux contenu dans la chambre 20 et donc une variation de pression à l'intérieur de cette dernière.

Dans la variante de réalisation représentée à la figure 3, la plaque ou disque 58 est immobilisée en rotation par rapport au carter 12 et guidée axialement à l'intérieur de celui-ci par les cannelures axiales 52.

A sa partie centrale, le disque de poussée 58 se prolonge par un manchon axial 68 qui fait saillie hors du carter 12, vers la droite en considérant la figure 3, à travers l'ouverture centrale formée dans le flasque 16 et dont la paroi cylindrique intérieure comporte un taraudage 62 qui coopère avec un filetage mâle 60 formé sur la portée cylindrique en vis-à-vis de l'arbre 22.

Les disques 50A et 50B sont agencés dans la chambre 20 comme dans le cas de la figure 1 et le fonctionnement de l'amortisseur représenté à la figure 3 est identique à celui de la figure 2.

En effet, la rotation de l'arbre 22 provoque un déplacement axial du disque 58 qui rapproche les disques 50A et 50B tandis que la pénétration axiale correspondante de la portion du manchon cylindrique 68 qui s'étend dans la chambre 20 provoque une réduction du volume disponible pour le liquide visqueux et un accroissement de la pression interne dans la chambre 20 lorsque ce déplacement axial a lieu de la droite vers la gauche en considérant la figure 3.

Il est à noter que, comme dans le cas de la figure 2, les deux effets de rapprochement des disques et d'augmentation de la pression interne s'ajoutent pour augmenter l'effet de freinage obtenu grâce à l'amortisseur 10.

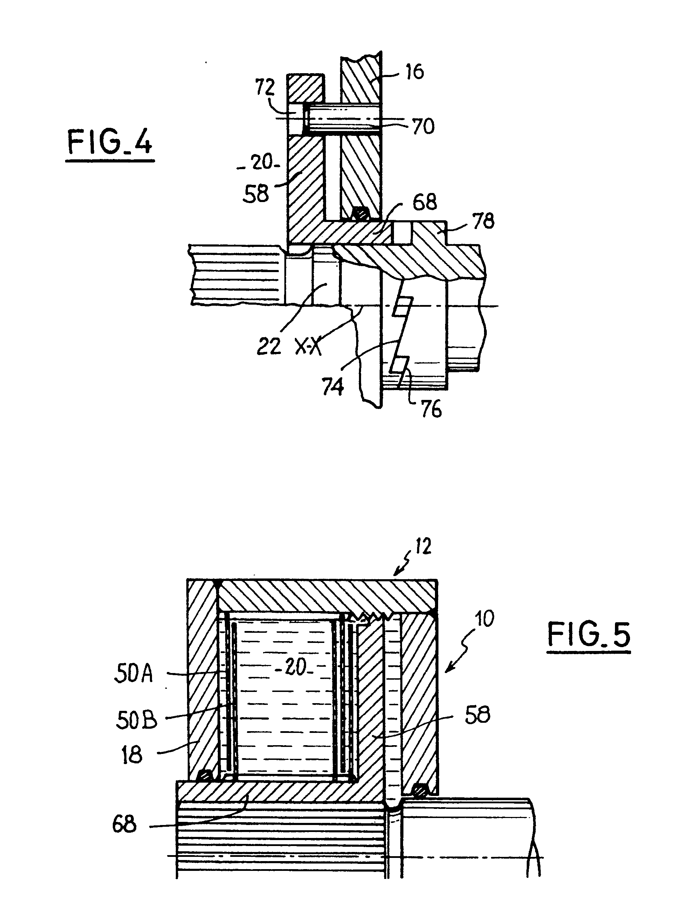

La variante de réalisation représentée à la figure 4 fonctionne selon le même principe que celle représentée à la figure 3, c'est-à-dire qu'il y a à la fois action sur l'écartement des disques et sur la pression à l'intérieur de la chambre 20.

On constate en effet que le disque de déplacement axial 58 comporte un manchon cylindrique 68 comme dans le cas de la figure 3.

Toutefois, dans cette variante de réalisation, l'immobilisation en rotation du disque de poussée 58 par rapport au carter 12 est assuré au moyen d'une série de pions 70 qui s'étendent parallèlement à l'axe X-X depuis le flasque 16 à l'intérieur de la chambre 20 et qui sont reçus avec jeu dans des perçages 72 formés en vis-à-vis dans le disque 58.

Les déplacements axiaux du disque 58 par rapport à l'arbre 22 sont assurés au moyen de deux chemins de cames circulaires 74 et 76 formés respectivement sur la portion du manchon cylindrique 68 située à l'extérieur du carter 12 et sur un épaulement radial externe 78 de l'arbre 22.

Du fait de la coopération entre les chemins de cames 74 et 76, toute rotation de l'arbre 22 par rapport au carter 12 provoque un déplacement axial du disque 58 par rapport à l'arbre central 22.

Dans le mode de réalisation représenté à la figure 4 les chemins de cames sont plans et il se produit donc un déplacement axial linéaire du disque en fonction de l'angle de rotation relatif. Il serait bien entendu possible de prévoir des chemins de cames de profils plus complexes permettant d'obtenir une loi quelconque de variation de l'effet de freinage en fonction de l'angle de rotation relatif entre l'arbre 22 et le carter 12.

La variante de réalisation représentée à la figure 5 propose un amortisseur rotatif 10 qui combine les caractéristiques de ceux représentés aux figures 1 et 3 mais dans lequel le manchon cylindrique 68 qui prolonge le disque de déplacement axial 58 s'étend hors du carter 12 de la droite vers la gauche en considérant la figure 5, c'est-à-dire au travers de l'ouverture centrale du flasque latéral 18.

Cette différence a pour conséquence que les effets de rapprochement des disques 50A et 50B et de variations de la pression interne dans la chambre 20 ne s'ajoutent pas mais sont en sens opposés.

On constate en effet qu'un déplacement axial vers la gauche du disque 58 provoque un rapprochement des disques 50A et 50B tout en provoquant une réduction du volume de la portion du manchon cylindrique 68 disposée dans la chambre 20.

La courbe caractéristique d'amortissement obtenue grâce à l'amortisseur rotatif selon l'invention dépend évidemment des dimensions générales du dispositif, du nombre des disques, du taux de remplissage, de la viscosité du fluide visqueux, de la température, etc.

On notera également que dans les amortisseurs téléscopiques classiques, la dissymétrie entre le travail en compression et le travail en détente est la même quel que soit le point de fonctionnement où l'on se situe dans la course de l'amortisseur et donc en particulier quelle que soit la charge du véhicule. Ceci a pour conséquence qu'un petit déplacement se superposant à un grand débattement est amorti élémentairement de la même façon quel qu'ait été le sens du grand débattement. Grâce à la conception selon l'invention, les amortissements ne sont pas les mêmes pour des petits débattements qui se superposent à de grands débattements statiques (variation de la charge du véhicule) ou dynamiques (variation de l'état de la chaussée) et cela en fonction du sens de ces petits débattements.

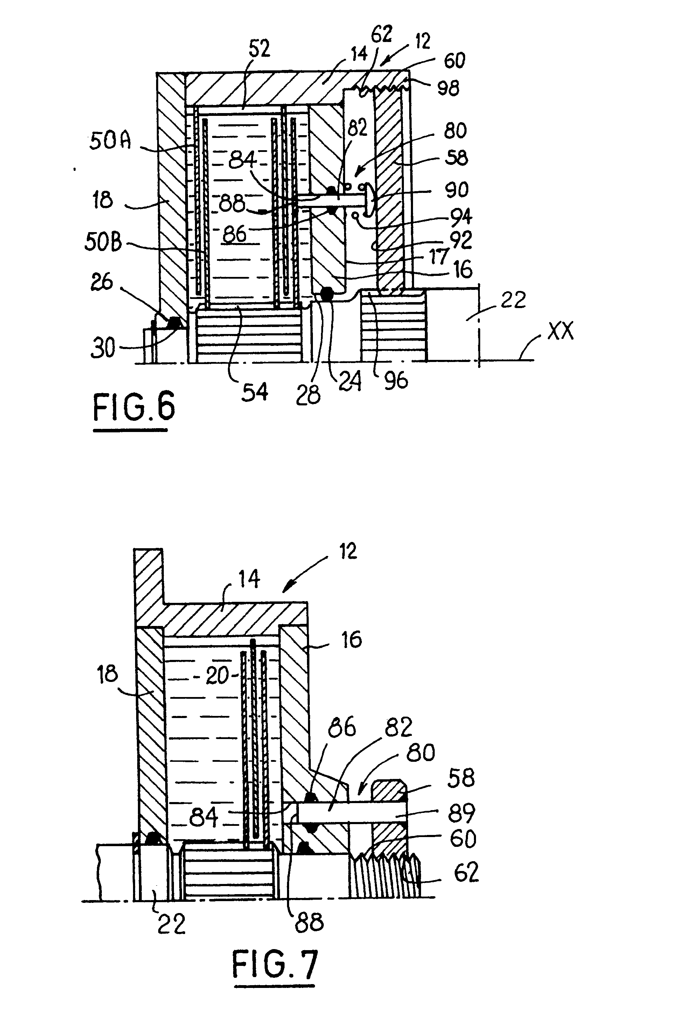

Les moyens pour faire varier la loi d'amortissement de l'amortisseur 10 en fonction du déplacement angulaire relatif de l'arbre central 22 par rapport au carter 12 sont, dans le mode de réalisation de la Figure 6, constitués par une série d'organes actifs 80 dont les déplacements axiaux sont commandés par un organe de poussée ou de déplacement axial 58.

Chacun des organes actifs 80 est un piston dont la tige 82 est reçue en coulissement étanche dans un orifice 84 du flasque latéral 16 du carter 12. L'étanchéité entre l'orifice 84 et la tige 82 est assurée au moyen d'un joint torique 86.

L'extrémité libre 88 de la tige 82 se déplace à l'intérieur de la chambre interne 20 pour coopérer avec le disque en vis-à-vis pour faire varier l'écartement entre les disques 50A et 50B et pour faire varier le volume interne de la chambre 20 qui est au moins partiellement rempli d'un fluide visqueux.

Chaque piston 80 comporte une tête 90 dont la face libre d'extrémité coopère avec la face en vis-à-vis 92 du disque de déplacement 58.

Un ressort hélicoïdal 94 agencé entre la face en vis-à-vis 17 du flasque 16 et la face interne de la tête 90 du piston 80 sollicite élastiquement ce dernier dans la direction correspondant à la sortie de la tige 82 hors de la chambre 20 de manière que la tête 90 soit en permanence en appui contre la face 92 de l'organe de déplacement 58.

L'organe 58 est réalisé sous la forme d'un disque plus épais qui est monté coulissant en son centre sur des cannelures axiales 96 de l'arbre 22. Le bord cylindrique annulaire extérieur du disque 58 comporte un filetage mâle 60 qui est reçu dans un taraudage complémentaire 62 formé dans la paroi cylindrique intérieure de la portion 98 de la virole 14 qui s'étend axialement au-delà du flasque 16, vers la droite en considérant la figure 6.

L'amortisseur rotatif de la figure 6 fonctionne de la manière suivante.

Si l'arbre central 22 est entraîné en rotation par rapport au carter 12, dans un premier sens de rotation, il entraîne en rotation les disques 50B entre les disques 50A et produit un effet classique de cisaillement du fluide visqueux qui procure un effet de freinage de la rotation. Cette même rotation de l'arbre 22 entraîne en rotation le disque de déplacement axial 58 par les cannelures 96 et provoque donc son déplacement axial par rapport à l'arbre 22 et au carter 12 du fait de la coopération entre le filet 60 et le taraudage 62. En fonction du sens du filetage, la rotation dans le premier sens, par exemple horaire, de l'arbre 22, provoque le déplacement axial du disque 58 dans la direction correspondant à la compression des disques 50A et 50B par les extrémités 88 des tiges 82 des pistons 80, c'est-à-dire vers la gauche en considérant la figure 6.

Ce déplacement axial a donc pour effet de réduire l'écartement entre les disques 50A et 50B et donc de faire varier la loi d'amortissement résultant du laminage du fluide visqueux en fonction du déplacement angulaire en rotation de l'arbre 22 par rapport au carter 12.

Le déplacement des tiges 82 dans la chambre interne 20 permet également de faire varier la pression interne à l'intérieur de la chambre interne 20 du fait de la réduction du volume disponible pour le liquide visqueux contenu dans cette dernière.

On comprend aisément que la rotation de l'arbre 22 par rapport au carter 12 dans le sens opposé, par exemple dans le sens anti-horaire, provoque le déplacement du disque 58 selon la direction axiale opposée qui correspond à un éloignement des disques 50A et 50B et qui procure donc une loi d'amortissement différente, le volume interne de la chambre 20 augmentant à nouveau du fait de la sortie des tiges 82 hors de la chambre 20 sous l'action des ressorts de rappel 94.

On décrira maintenant la variante de réalisation représentée à la figure 7.

Les organes actifs 80 sont ici constitués par des tiges 82 dont les extrémités 88 pénètrent dans des orifices 84 du flasque latéral 16 de la même manière que les tiges 82 des pistons 80 du mode de réalisation précédent.

Les extrémités libres opposées 89 des tiges 82 sont fixées dans des alésages correspondants 100 formés dans le disque de déplacement axial 58.

L'immobilisation axiale et en rotation des tiges 82 par rapport au disque 58 assure une immobilisation en rotation de ce dernier par rapport au carter 12.

Le disque de déplacement axial 58 comporte un trou central dans lequel est formé un taraudage 62 qui coopère avec un filetage mâle 60 formé sur l'arbre 22.

L'amortisseur rotatif représenté à la figure 7 fonctionne d'une manière similaire à celle de l'amortisseur représenté à la figure 6, le déplacement axial de l'organe 58 et le déplacement des tiges 82 qui en découle provoquant une variation de pression à l'intérieur du carter.

Les orifices 84 prévus dans le flasque latéral 16 peuvent servir au remplissage et à la vidange de la chambre interne 20.

L'invention n'est pas limitée à son application aux suspensions de véhicules automobiles et d'autres applications sont envisageables pour ce type d'amortisseurs telles que par exemple dans les dispositifs connus sous le nom de "Damper".

Dans les deux modes de réalisation, les orifices 84 sont de préférence répartis angulairement de manière régulière sur un même cercle autour de l'axe X-X.

**Revendications**

1. Amortisseur rotatif (10) du type comportant un carter cylindrique creux étanche (12) dans lequel sont agencés des disques (50A, 50B) qui sont alternativement solidaires en rotation du carter (12) ou d'un arbre central coaxial (22) monté à rotation dans le carter (12), la chambre interne (20) délimitée par le carter (12) étant remplie au moins partiellement d'un fluide visqueux reçu entre les faces en vis-à-vis des disques, caractérisé en ce qu'il comporte des moyens pour faire varier la loi d'amortissement de l'amortisseur en fonction du déplacement angulaire relatif de l'arbre central (22) par rapport au carter (12).

2. Amortisseur rotatif selon la revendication 1, caractérisé en ce que les moyens (58) pour faire varier la loi d'amortissement agissent pour faire varier l'écartement entre les faces en vis-à-vis des disques (50A, 50B).

3. Amortisseur rotatif selon la revendication 2, caractérisé en ce que les moyens pour faire varier l'écartement entre les faces en vis-à-vis des disques comportent un organe (58) de déplacement axial des disques agencé à l'intérieur du carter (12) et des moyens (60, 62, 74, 76) de conversion dudit déplacement angulaire relatif en un déplacement axial de l'organe (58) de déplacement des disques.

4. Amortisseur selon la revendication 3, caractérisé en ce que l'organe de déplacement (58) est solidaire en rotation de l'un des deux éléments constitué par le carter (12) et l'arbre central (22) et susceptible de se déplacer axialement par rapport à l'un de ces deux éléments, et en ce qu'il est relié à l'autre desdits deux éléments (22, 12) par coopération de formes (60, 62, 74, 76) prévues respectivement sur l'organe de déplacement (58) et sur l'autre des deux éléments qui convertissent ledit déplacement angulaire relatif en un déplacement axial de l'organe de déplacement à l'intérieur de ladite chambre (20).

5. Amortisseur selon la revendication 4, caractérisé en ce que lesdites formes coopérantes comportent un filetage mâle (60) et un taraudage complémentaire (62) formés respectivement sur l'organe de déplacement (58) ou l'autre (22) desdits deux éléments.

6. Amortisseur selon la revendication 4, caractérisé en ce que lesdites formes coopérantes comportent un chemin de came circulaire (74) lié en rotation à l'organe de déplacement (58) ou audit autre élément et un élément suiveur de came (76) lié en rotation audit autre élément ou audit organe.

7. Amortisseur selon l'une quelconque des revendications 1 à 6, caractérisé en ce que les moyens pour faire varier la loi d'amortissement agissent pour faire varier la pression de fluide dans ladite chambre (20).

8. Amortisseur selon la revendication 7, prise en combinaison avec la revendication 3, caractérisé en ce que l'organe de déplacement comporte une portion (68) qui s'étend à l'extérieur du carter (12) de manière à faire varier le volume de la partie de l'organe de déplacement reçu dans ladite chambre (20) en fonction de la position axiale dudit organe (58) par rapport au carter (12) pour faire varier ainsi la pression interne du fluide dans ladite chambre (20).

9. Amortisseur selon la revendication 8, caractérisé en ce que ladite variation de volume est une augmentation de celui-ci lorsque l'organe de déplacement (58) se déplace axialement par rapport au carter (12) dans le sens correspondant à la réduction dudit écartement entre les faces en vis-à-vis des disques.

10. Amortisseur selon la revendication 8, caractérisé en ce que ladite variation de volume est une réduction de celui-ci lorsque l'organe de déplacement (58) se déplace axialement par rapport au carter (12) dans le sens correspondant à la réduction dudit écartement entre les faces en vis-à-vis des disques.

11. Amortisseur selon l'une quelconque des revendications précédentes, caractérisé en ce que les disques sont montés coulissants axialement par rapport au carter (12) et à l'arbre central (22).

12. Amortisseur selon l'une quelconque des revendications précédentes, caractérisé en ce que les faces en vis-à-vis des disques comportent un revêtement de friction.

13. Amortisseur selon l'une quelconque des revendications précédentes, caractérisé en ce que les faces en vis-à-vis des disques sont susceptibles de venir en contact mutuel.

14. Amortisseur rotatif (10) selon la revendication 1, caractérisé en ce qu'il comporte un organe actif (80) agencé à l'extérieur du carter dont une partie (82) s'étend axialement à l'intérieur du carter au travers d'un orifice (84) ménagé dans un flasque latéral (16) du carter dans lequel il est reçu coulissant axialement et un organe (58) de déplacement axial de l'organe actif (80) par rapport au carter (12) dont les déplacements sont commandés par des moyens (60, 62) de conversion dudit déplacement angulaire relatif en un déplacement axial de l'organe de déplacement des disques.

15. Amortisseur rotatif selon la revendication 14, caractérisé en ce que l'organe de déplacement (58) est solidaire en rotation de l'un des deux éléments constitués par le carter (12) et l'arbre central (22) et susceptible de se déplacer axialement par rapport à l'un de ces deux éléments, et en ce qu'il est relié à l'autre desdits deux éléments par coopération de formes (60, 62) prévues respectivement sur l'organe de déplacement (58) et sur l'autre des deux éléments et qui convertissent ledit déplacement angulaire relatif en un déplacement axial de l'organe de déplacement.

16. Amortisseur selon la revendication 15, caractérisé en ce que lesdites formes coopérantes comportent un filetage mâle (60) et un taraudage complémentaire (62) formés sur l'organe de déplacement (58) ou l'autre desdits deux éléments (12, 22).

17. Amortisseur rotatif selon l'une quelconque des revendications 14 à 16, caractérisé en ce que l'organe actif (80) est un piston dont la tige (82) est reçue dans ledit orifice (84) et dont la tête (90) agencée à l'extérieur du carter (12) coopère avec ledit organe de déplacement axial (58).

18. Amortisseur rotatif selon la revendication 17, caractérisé en ce que ledit organe de déplacement axial (58) est un disque dont la face (92) tournée vers le carter coopère avec la face en vis-à-vis de la tête (90) dudit piston (80).

19. Amortisseur rotatif selon l'une des revendications 17 ou 18, caractérisé en ce que des moyens (94) de rappel élastique du piston dans la direction correspondant à la sortie de la tige (82) hors du carter (12) sont agencés entre la tête du piston (90) et la face en vis-à-vis (17) du flasque latéral (16) du carter.

20. Amortisseur rotatif selon l'une quelconque des revendications 14 à 16, caractérisé en ce que l'organe actif (80) est une tige (82) reçue dans ledit orifice (84) et dont l'extrémité libre (89) agencée à l'extérieur du carter est fixée audit organe de déplacement axial (58).

21. Amortisseur rotatif selon l'une quelconque des revendications 17 à 19 prises en combinaison avec la revendication 16, caractérisé en ce que ledit filetage mâle (60) est formé sur l'organe de déplacement (58) et en ce que le taraudage complémentaire (62) est formé dans le carter.

22. Amortisseur rotatif selon la revendication 20 prise en combinaison avec la revendication 16, caractérisé en ce que ledit filetage mâle (60) est formé sur l'arbre central (22) et en ce que le taraudage complémentaire (62) est formé sur l'organe de déplacement axial.

23. Amortisseur selon l'une quelconque des revendications 14 à 22, caractérisé en ce que des moyens d'étanchéité (86) sont agencés dans la paroi dudit orifice (84) pour coopérer avec la surface en vis-à-vis de l'organe actif (80).

24. Amortisseur selon l'une quelconque des revendications précédentes, caractérisé en ce que la partie (88) de l'organe actif (80) qui s'étend à l'intérieur du carter coopère avec le disque en vis-à-vis.

FIG.1

FIG.2

FIG.3

9

FIG.4

FIG.5

FIG.6

FIG.7

Office européen
des brevets

# RAPPORT DE RECHERCHE EUROPEENNE

Numero de la demande

EP 91 40 0463

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | PATENT ABSTRACTS OF JAPAN, vol. 13, no. 376 (M-862)[3724], 21 aout 1989; & JP-A-1 131 348 (ISHII KOGYO K.K.) 24-05-1989 | 1,2 | F 16 F 9/12 F 16 F 9/44 |
| | --- | | |
| A | IDEM | 7,11 | |
| | --- | | |
| Y | US-A-1 787 602 (D.H. SWEET) * Page 2, lignes 4-98; figures 4-6 * | 1,2 | |
| A | | 3,4,6, 11-15 | |
| | --- | | |
| Y | US-A-3 651 903 (H.G. BUTLER) * Colonne 2, ligne 49 - colonne 4, ligne 22; figures 4-5 * | 14 | |
| A | | 1-3,5,7 -9,11, 13 | |
| | --- | | |
| Y | GB-A- 401 065 (LIFT) * Page 1, ligne 71 - page 2, ligne 66; figures 1-3 * | 14 | **DOMAINES TECHNIQUES RECHERCHES (Int. Cl5)** |
| A | | 1-3,15, 17,18, 24 | B 60 G F 16 F B 62 D |
| | --- | | |
| A | PATENT ABSTRACTS OF JAPAN, vol. 13, no. 148 (M-812)[3496], 11 avril 1989; & JP-A-63 308 239 (SUGATSUNE IND. CO., LTD) 15-12-1988 | 1,7 | |
| | --- | | |
| A | GB-A-1 256 947 (SELF ENERGISING DISC BRAKES LTD) * Page 2, lignes 13-90; figure 2 * | 1,2,7, 11 | |
| | --- -/- | | |

Le présent rapport a été établi pour toutes les revendications

| Lieu de la recherche | Date d'achèvement de la recherche | Examinateur |
|---|---|---|
| LA HAYE | 24-05-1991 | BRUNELLO B. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

EP 0 446 091 A1

Office européen
des brevets

**RAPPORT DE RECHERCHE EUROPEENNE**

Numero de la demande

EP 91 40 0463

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-C- 654 017 (ARDELTWERKE)<br>* Page 2, ligne 7 - page 3, ligne 44; figures 1-3 * | 1,14-16 ,18,22 | |
| A | EP-A-0 025 425 (ÖSTERREICHISCHE SALEN-KUNSTSTOFFWERKE)<br>* Page 8, ligne 21 - page 9, ligne 19; figure 1 * | 1,11 | |

DOMAINES TECHNIQUES RECHERCHES (Int. Cl.5)

Le présent rapport a été établi pour toutes les revendications

| Lieu de la recherche | Date d'achèvement de la recherche | Examinateur |
|---|---|---|
| LA HAYE | 24-05-1991 | BRUNELLO B. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

13